# EUROPÄISCHE PATENTSCHRIFT

(11) **EP 4 226 479 B1**
(45) Veröffentlichungstag und Bekanntmachung des Hinweises auf die Patenterteilung: **24.06.2026**
(21) Anmeldenummer: 21790365.7
(22) Anmeldetag: 28.09.2021
(51) Int. Cl.: H02K 15/048

(54) **VERFAHREN ZUR HERSTELLUNG EINER WICKLUNG FÜR EINEN STATOR EINER ELEKTRISCHEN ROTATIONSMASCHINE, STATOR, VERFAHREN ZUR HERSTELLUNG DES STATORS UND ELEKTRISCHE ROTATIONSMASCHINE**
METHOD FOR PRODUCING A WINDING FOR A STATOR OF AN ELECTRIC ROTATING MACHINE, STATOR, METHOD FOR PRODUCING THE STATOR, AND ELECTRIC ROTATING MACHINE
PROCÉDÉ DE FABRICATION D'UN ENROULEMENT POUR UN STATOR D'UNE MACHINE ÉLECTRIQUE TOURNANTE, STATOR, PROCÉDÉ DE FABRICATION DU STATOR ET MACHINE TOURNANTE ÉLECTRIQUE

(30) Priorität: 07.10.2020 DE 102020126246
(43) Veröffentlichungstag der Anmeldung: 16.08.2023
(73) Patentinhaber: Schaeffler Technologies AG & Co. KG, 91074 Herzogenaurach (DE)
(72) Erfinder: WITT, Holger, 77815 Bühl (DE)
(74) Vertreter: Schaeffler Technologies
(86) Internationale Anmeldenummer: PCT/DE2021/100784
(87) Internationale Veröffentlichungsnummer: WO 2022/073546

(56) Entgegenhaltungen:
- WO-A1-2019/166061
- WO-A1-2020/104683
- DE-T2- 60 125 436
- JP-A- 2010 200 547

## Beschreibung

Die Erfindung betrifft ein Verfahren zur Herstellung einer Wicklung für einen Stator einer elektrischen Rotationsmaschine.

Der elektrische Antriebsstrang von Kraftfahrzeugen ist nach dem Stand der Technik bekannt. Dieser besteht aus Komponenten zur Energiespeicherung, Energiewandlung und Energieleitung. Zu den Komponenten der Energiewandlung gehören Radialflussmaschinen und Axialflussmaschinen.

Radialflussmaschinen weisen jedoch oftmals lediglich einen Betriebspunkt auf, in dem sie den besten Wirkungsgrad haben. Entsprechend sind sie nicht dafür ausgelegt, in Abhängigkeit der an sie gestellten, wechselnden Anforderungen den Betriebspunkt zu verstellen und dadurch entsprechend der unterschiedlichen Anforderungen der unterschiedlichen Betriebsparametern bzw. in unterschiedlichen Betriebspunkten die höchste Effizienz zu erzielen.

Um diesen Nachteil zu überwinden werden oftmals den auftretenden Anforderungen hinsichtlich ihres Betriebsbereiches angepasste elektrische Rotationsmaschinen verwendet, oder der genannte Nachteil wird durch Ankopplung der elektrischen Rotationsmaschine an eine Getriebeeinheit oder Integration einer Getriebeeinheit in die elektrische Rotationsmaschine kompensiert, wie zum Beispiel bei einer elektrischen Achse.

Axialflussmaschinen sind nach dem Stand der Technik in diversen Bauweisen mit einem oder mehreren Statoren und einem oder mehreren Rotoren bekannt.

Eine elektrische Axialflussmaschine, auch als Transversalflussmaschine bezeichnet, ist ein Motor oder Generator, bei dem der Magnetfluss zwischen einem Rotor und einem Stator parallel zur Drehachse des Rotors realisiert wird. Andere Bezeichnungen für elektrische Axialflussmaschinen sind auch bürstenloser Gleichstrommotor, permanenterregter Synchronmotor oder Scheibenläufermotor.

Eine solche Axialflussmaschine kann in Bauarten ausgeführt sein, welche sich durch die Anordnung von Rotor und/oder Stator unterscheiden, und unterschiedliche Besonderheiten und Vorteile bei der Anwendung, als z.B. Traktionsmaschine für ein Fahrzeug, realisieren.

Axialflussmaschinen existieren mit unterschiedlichen Wicklungsformen. Eine verbreitete Wicklungsform ist die Einzelzahnwicklung. Einzelzahnwicklungen bilden zwar kleine Wickelköpfe aus, erzeugen jedoch ein magnetisches Feld mit hohem Anteil an Oberwellen, also Wellen mit anderer Frequenz als die Umdrehungszahl des Rotors der Axialflussmaschine, welche die Akustik und den Wirkungsgrad negativ beeinflussen. Axialflussmaschinen mit verteilten Wicklungen haben den Vorteil, dass die vorgenannten Nachteile nicht oder in nur vermindertem Maß auftreten. Jedoch haben die Wickelköpfe dieser verteilten Wicklungen in axialer und / oder radialer Richtung einen großen Bauraumbedarf.

Speziell bei Axialflussmaschinen sind große Wickelköpfe nicht erwünscht, da diese bei radialer Ausdehnung den maximalen Durchmesser der aktiven Bauteile einschränken, wodurch das maximale zur Verfügung stellbare Drehmoment gemindert wird. Eine relativ große axiale Ausdehnung der Wickelköpfe bedingt eine größere, ebenfalls unerwünschte axiale Baulänge der gesamten elektrischen Rotationsmaschine beeinflussen.

Zur Erläuterung des Standes der Technik wird im Folgenden auf konkrete Ausführungsformen eingegangen.

Die US 6,348,751 B1 offenbart einen Elektromotor mit aktiver Hysteresesteuerung von Wicklungsströmen und/oder mit effizienter Statorwicklungsanordnung und/oder einstellbarem Luftspalt zur Ausbildung einer Axialflussmaschine. In mehreren Segmenten umfasst ein Stator dieses Elektromotors mehrere Statorzähne, die mit entsprechenden Segmenten von Wicklungen, ausgeführt in mehreren Ebenen, serpentinenartig umschlungen sind. Jede Phase belegt dabei einen jeweiligen Umfangsbereich des Stators.

Die US 2003/0189388 A1 offenbart eine Baugruppe, welche eine Axialflussmaschine aufweist, die einen Stator und einen Rotor umfasst. Der Stator weist mehrere axial ausgerichtete Statorzähne auf, die durch Nuten voneinander getrennt sind. Um die Statorzähne herum verlaufen Windungen einer Stator-Wicklung. Es ersichtlich, dass die Wickelköpfe einen relativ großen Volumenbedarf in axialer und/ oder radialer Richtung haben.

Die US 2019/0252930 A1 betrifft eine Statoranordnung für eine Axialflussmaschine, sowie eine Axialflussmaschine mit einer derartigen Statoranordnung. Die Statoranordnung umfasst einen Stator mit einer Mehrzahl von Statorzähnen, welche in Umfangsrichtung konzentrisch verteilt und in Axialrichtung von einem Rotor durch einen Luftspalt getrennt angeordnet sind, wobei die Statorzähne zwei in Axialrichtung gegenüberliegende Endabschnitte und zwischen den Endabschnitten einen Zahnkern umfassen, und wobei jeder Zahnkern eine Kernquerschnittsfläche aufweist und mit zumindest einer Spulenwicklung umwickelt ist. Hier sind entsprechend Einzelzahnwicklungen vorgesehen.

Bei den verwendeten Wicklungen sind deren einzelne Windungen häufig miteinander verwoben, so dass ein separates Biegen der einzelnen Leiter und eine anschließende Zusammenführung in einem Geflecht mit hohem maschinellen sowie zeitlichem Aufwand verbunden ist.

Aus der JP 2010 200547 A ist ein Verfahren zur Herstellung einer Wicklung für einen Stator einer elektrischen Rotationsmaschine gemäß dem Oberbegriff des Anspruchs 1 bekannt.

Bezüglich weiteren Standes der Technik wird auf die WO 2020/104683 A1, die DE 601 25 436 T2 und die WO 2019/166061 A1 verwiesen.

Hiervon ausgehend liegt der vorliegenden Erfindung die Aufgabe zugrunde, ein Verfahren zur Herstellung einer Wicklung für einen Stator einer elektrischen Rotationsmaschine zur Verfügung zu stellen, das es ermöglicht, die Wicklung und entsprechend auch den die Wicklung aufweisenden Stator sowie die den Stator umfassende elektrische Rotationsmaschine mit geringem Kosten- und Zeitaufwand zu fertigen.

Diese Aufgabe wird durch das Verfahren zur Herstellung einer Wicklung für einen Stator nach Anspruch 1 gelöst.

Vorteilhafte Ausführungsformen des erfindungsgemäßen Verfahrens zur Herstellung einer Wicklung sind in den Unteransprüchen angegeben.

Die Merkmale der Ansprüche können in jeglicher technisch sinnvollen Art und Weise kombiniert werden, wobei hierzu auch die Erläuterungen aus der nachfolgenden Beschreibung sowie Merkmale aus den Figuren hinzugezogen werden können, die ergänzende Ausgestaltungen der Erfindung umfassen.

Die Erfindung betrifft ein Verfahren zur Herstellung einer Wicklung für einen Stator einer elektrischen Rotationsmaschine, bei dem mehrere Leiter zur Verfügung gestellt werden, und die Leiter auf einem ersten Schwert entlang einer ersten Wickelrichtung aufgewickelt werden, so dass die Leiter das erste Schwert umschlingen. Dann wird das erste Schwert aus der dadurch erzeugten Wicklung der Leiter entfernt, wie zum Beispiel herausgezogen.

Insbesondere dient das Verfahren zur Herstellung einer Wicklung für einen Stator einer Axialflussmaschine, wobei jedoch auch die Herstellung einer Wicklung für eine Radialflussmaschine nicht ausgeschlossen werden soll. Eine jeweilige Wickelrichtung verläuft dabei in einer Rotation im Wesentlichen um die Längsachse des ersten Schwertes.

Eine vorteilhafte Ausführungsform des Verfahrens sieht vor, dass die Leiterpaare auf einem ersten Schwert entlang einer ersten Wickelrichtung aufgewickelt werden, so dass die Leiter das erste Schwert umschlingen, und nach Erreichen einer vorgesehenen Windungszahl entlang einer zweiten Wickelrichtung, die der ersten Wickelrichtung entgegengesetzt ist, an einem zweiten Schwert gebogen werden, so dass die Leiter das zweite Schwert mit verbindenden Übergangsabschnitten teilweise umschlingen. Danach werden die Leiter auf einem dritten Schwert entlang der ersten Wickelrichtung aufgewickelt, so dass die Leiter das dritte Schwert umschlingen. Dann können die Schwerter aus den dadurch erzeugten Wicklungen der Leiterpaare entfernt, wie zum Beispiel herausgezogen werden.

Auch hier verläuft ein jeweilige Wickelrichtung in einer Rotation im Wesentlichen um die Längsachse des betreffenden Schwertes.

Unter einem Schwert wird hierbei ein längliches Formelement verstanden, welches der Umschlingung der Leiter bzw. der dadurch erzeugten Wicklung insbesondere die innere Kontur verleiht. Das zweite Schwert kann dabei im Querschnitt eine vom Querschnitt des ersten Schwerts bzw. des dritten Schwerts abweichende Geometrie aufweisen, insbesondere in dem Bereich, der nicht zur Umschlingung mit den Leitern dient. Des Weiteren reicht es aus, wenn das zweite Schwert deutlich kürzer als die beiden anderen Schwerter ausgeführt ist. Die durch die Biegung an oder auf dem zweiten Schwert gebogenen Abschnitte der Leiter werden auch als verbindende Übergangsabschnitte bezeichnet, die einen sogenannten Lagensprung ausbilden. Diese dienen dazu, bei Anordnung der Wicklung an einem Statorkörper in Nuten des Starterkörpers verlaufende lineare Abschnitte der Leiter miteinander zu verbinden und dabei Gruppen von Statorzähnen zu umschlingen.

Erfindungsgemäß haben das erste Schwert und das dritte Schwert jeweils eine Querschnittsform, die eine erste Umschlingungsseite und eine zweite Umschlingungsseite aufweist, wobei die erste Umschlingungsseite länger ist als die zweite Umschlingungsseite.

Die beiden Umschlingungsseiten sind dabei miteinander verbunden, so dass Schwerter zur Verfügung gestellt werden, die im Profil im Wesentlichen jeweils eine Keilform ausbilden. Durch Umschlingung der Umschlingungsseiten der Schwerter mit den Leitern weisen die dadurch erzeugten Windungen - bei einer Projektion der Windungen in eine Ebene - eine Zickzackform auf. Bei einer Gleichsetzung des Zickzackverlaufs mit einer Schwingung entsprechen die spitzen Eckbereiche der Zickzackform Minima und Maxima der Schwingung und damit den Extremwertbereichen.

Entsprechend bildet ein jeweiliger Leiter eine räumliche Spirale bzw. eine Schraubengangform aus, mit eckigen Bereichen in den Extremwerten. Diese Bereiche in den Extremwerten können auch als verbindende Leiterstücke bezeichnet werden.

Die linearen Abschnitte sind durch Bereiche des jeweiligen Leiters miteinander verbunden, die die Extremwerte ausbilden. Diese die Extremwerte ausbildenden Bereiche sind die Bereiche des betreffenden Leiters, die bei späterer Anordnung der erzeugten Wicklung an einem Statorkörper und in Nuten zwischen Statorzähnen verlaufend die Statorzähne an deren radialer Innenseite oder auch einen deren radialer Außenseite umgreifen und demzufolge in Nuten eines Statorkörpers anzuordnende lineare Abschnitte der Leiter miteinander verbinden.

Die linearen Abschnitte bilden zusammen mit den verbindende Leiterstücken eine jeweilige Umschlingung von wenigstens einem Statorzahn aus.

Dabei kann die Biegung der Leiter an dem zweiten Schwert mit einem Umschlingungswinkel am zweiten Schwert von 100° bis 220° realisiert werden.

Eine weitere Ausführungsform des Verfahrens sieht vor, dass die verbindenden Übergangsabschnitte derart umgeformt werden, dass die im Wesentlichen in Schraubengangform vorliegenden Wicklungen der Leiter jeweils zwischen zwei zueinander parallel verlaufenden Ebenen positioniert werden. Dadurch soll dem hergestellten Geflecht eine im Wesentlichen flache, scheibenförmige Form gegeben werden. Bei Anwendung des Verfahrens zur Herstellung einer Wicklung für einen Stator einer elektrischen Radialflussmaschine lässt sich eine mattenförmige bzw. längliche Flächenform mit Abstufungen bei den Übergangsabschnitten erzeugen.

Dadurch wird erreicht, dass die einzelnen Leiter letztendlich in mehreren, zueinander parallel verlaufenden Ebenen positioniert sind. So lässt sich die Anordnung von Leitern in mehreren Ebenen am Statorkörper realisieren.

Des Weiteren kann das erfindungsgemäße Verfahren noch den Schritt aufweisen, dass nach Positionierung der Wicklungen der Leiter zwischen zwei zueinander parallel verlaufenden Ebenen das erzeugte Geflecht in seiner senkrecht zur erzeugten Nebeneinanderanordnung verlaufenden Dicke verringert wird, und/ oder gebogen wird, so dass es in Kreisform verläuft.

Mit anderen Worten erfolgt ein Plattdrücken des erzeugten Geflechts, um dessen axiale Erstreckung bei Anordnung zwischen Statorzähnen einer Axialflussmaschine zu verringern. Bei diesem Plattdrücken werden die räumlich ausgebildeten Maschen zusammengedrückt, sodass das Geflecht eine geringere Dicke aufweist.

Durch das Zusammendrücken werden insbesondere Bereiche des jeweiligen Leiters, die die Extremwerte ausbilden, zusammengedrückt, sodass das Geflecht insbesondere in diesen Abschnitten eine geringere Dicke aufweist.

Das Biegen des erzeugten Geflechts in Kreisform kann dabei vor oder nach der Dickenverringerung durchgeführt werden.

Ein Stator einer elektrischen Rotationsmaschine umfasst einen Statorkörper, der mehrere entlang einer Umfangsrichtung angeordnete Statorzähne aufweist und zwischen den Statorzähnen ausgebildete Nuten, sowie in den Nuten angeordnete Leiterabschnitte einer erfindungsgemäß hergestellten Wicklung. Dabei sind in einer jeweiligen Nut Leiterabschnitte der Leiter angeordnet. Die Leiter mäandern abweichend von einer grundsätzlich in Umfangsrichtung verlaufenden Wicklungsrichtung in einer im Wesentlichen senkrecht zur Umfangsrichtung verlaufenden Richtung in radialer Richtung, und umschlingen mit einer jeweiligen dadurch gebildeten Umschlingung jeweils eine Gruppe von Statorzähnen.

Unter der senkrechten Richtung kann auch eine Richtung von 60°-120° in Bezug zu einer ideellen Tangente an der Umfangsrichtung verstanden werden. Zudem kann der Verlauf in dieser Richtung auch gekrümmt oder mit wenigstens einem leichten Knick ausgeführt sein.

Der Stator ist insbesondere ein Stator einer Axialflussmaschine. Der Statorkörper kann auch Statorjoch bezeichnet werden, an dem mehrere axial vorstehende Statorzähne angeordnet sind.

Die Leiter eines Leiterpaares, die an einer jeweiligen Phase angeschlossen sind, sind dazu eingerichtet, ausgehend von einem gemeinsamen Anschlussbereich unterschiedlich gepolt zu werden.

Bei einem Verfahren zur Herstellung eines erfindungsgemäßen Stators einer elektrischen Rotationsmaschine, werden ein Statorkörper, der mehrere entlang einer Umfangsrichtung angeordnete Statorzähne und zwischen den Statorzähnen ausgebildete Nuten aufweist, sowie eine erfindungsgemäß hergestellte Wicklung zur Verfügung gestellt, und in den Nuten Leiterabschnitte der Leiter angeordnet, so dass die Leiter zumindest einen Anteil von Wicklungen des Stators ausbilden . Dabei werden in einer jeweiligen Nut zumindest ein Leiterabschnitt der Leiter derart angeordnet, dass die Leiter abweichend von einer grundsätzlich in Umfangsrichtung verlaufenden Wicklungsrichtung in einer im Wesentlichen senkrecht zur Umfangsrichtung verlaufenden Richtung in radialer Richtung mäandern und mit einer jeweiligen dadurch gebildeten Umschlingung jeweils eine Gruppe von Statorzähnen umschlingen.

Auch hier kann unter der senkrechten Richtung auch eine Richtung von 60°-120° in Bezug zu einer ideellen Tangente an der Umfangsrichtung verstanden werden.

Zudem kann der Verlauf in dieser Richtung auch gekrümmt oder mit wenigstens einem leichten Knick ausgeführt sein.

Des Weiteren wird eine elektrische Rotationsmaschine zur Verfügung gestellt, welche einen Rotor sowie wenigstens einen erfindungsgemäßen Stator aufweist.

Insbesondere ist diese elektrische Rotationsmaschine als eine Axialflussmaschine ausgestaltet.

Insbesondere ist vorgesehen, dass die Leiter der Phasen an entsprechende, Strom der betreffenden Phase führende Kontakte in einer Sternschaltung angeschlossen sind.

Die oben beschriebene Erfindung wird nachfolgend vor dem betreffenden technischen Hintergrund unter Bezugnahme auf die zugehörigen Zeichnungen, welche bevorzugte Ausgestaltungen zeigen, detailliert erläutert. Die Erfindung wird durch die rein schematischen Zeichnungen in keiner Weise beschränkt, wobei anzumerken ist, dass die in den Zeichnungen gezeigten Ausführungsbeispiele nicht auf die dargestellten Maße eingeschränkt sind. Es ist dargestellt in
Fig. 1: eine Axialflussmaschine in I- Anordnung in einem perspektivischen Schnitt;
Fig. 2: die Axialflussmaschine in I- Anordnung in Explosionsdarstellung;
Fig. 3: einen Statorkern in perspektivischer Darstellung;
Fig. 4: den Statorkern mit Wicklungen;
Fig. 5: eine Wicklung in perspektivischer Darstellung;
Fig. 6: eine Wicklung in Frontalansicht;
Fig. 7: eine erste Seitenansicht der Wicklung;
Fig. 8: eine zweite Seitenansicht der Wicklung;
Fig. 9: eine dritte Seitenansicht der Wicklung;
Fig. 10: Schnittansicht gemäß dem in Figur 6 angedeuteten Schnittverlauf;
Fig. 11: ein Leitungselement in Doppellage;
Fig. 12: in den Teildarstellungen a) bis f) die Anordnung einzelner Leitungselemente in der Wicklung;
Fig. 13: die Anordnung von Plus-Leiter und Minus-Leiter;
Fig. 14: den Statorkern mit Wicklungen und elektrischen Anschlüssen;
Fig. 15: Schwerter mit darauf angeordneten mehreren Wicklungen in einer perspektivischen Ansicht;
Fig. 16: Schwerter mit darauf angeordneten mehreren Wicklungen in Draufsicht;
Fig. 17: Schwerter mit lediglich einer darauf angeordneten Wicklung in einer perspektivischen Ansicht;
Fig. 18: Schwerter mit lediglich einer darauf angeordneten Wicklung in Draufsicht;
Fig. 19: die erzeugte Wicklung in perspektivischer Ansicht;
Fig. 20: die erzeugte Wicklung in Draufsicht;
Fig. 21: die Schwerter mit Wicklungen in Frontansicht;
Fig. 22: ein Schwert mit Wicklung in Ansicht von der Seite;
Fig. 23: ein Schwert mit Wicklung in Draufsicht;
Fig. 24: die erzeugte Wicklung in Ansicht von der Seite;
Fig. 25: die erzeugte Wicklung in Draufsicht;
Fig. 26: die erzeugte Wicklung;
Fig. 27: ein Leitungselement in perspektivischer Ansicht;
Fig. 28: das Leitungselement in Ansicht von der Seite;
Fig. 29: zwei Leitungselemente in perspektivischer Ansicht;
Fig. 30: eine Wicklung in perspektivischer Ansicht;
Fig. 31: die Wicklung in Ansicht von der Seite;
Fig. 32: ein Leitungselement in Ansicht von der Seite;
Fig. 33: ein Leitungselement in Draufsicht;
Fig. 34: zwei miteinander verbundene Leitungselemente in Ansicht von der Seite;
Fig. 35: die zwei miteinander verbundenen Leitungselemente in Draufsicht;
Fig. 36: die erzeugte Wicklung;
Fig. 37: ein Statorkern mit Wicklung in perspektivischer Ansicht; und
Fig. 38: ein Statorkern mit Wicklung in Frontalansicht.

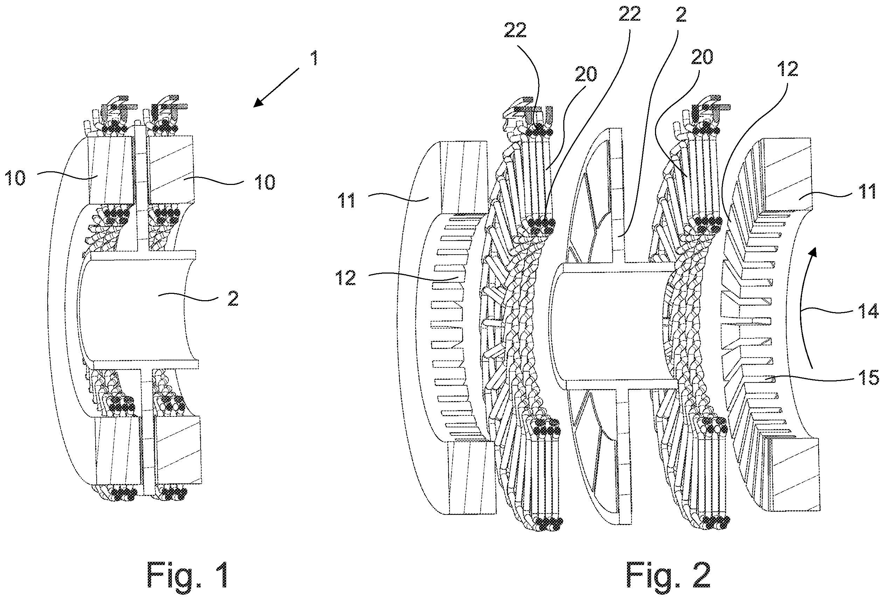

Zunächst wird der allgemeine Aufbau eines erfindungsgemäßen Stators anhand der Figuren 1 und 2 erläutert.

Figur 1 zeigt eine Axialflussmaschine in I- Anordnung mit Wellenwicklungen in einem perspektivischen Schnitt, die beidseitig eines Rotors 2 jeweils einen Stator 10 aufweist. Der jeweilige Stator 10 umfasst einen Statorkörper 11, der ein Statorjoch umfasst oder ausbildet. Vom Statorkörper 11 oder auch von ihm umfasst weist der Stator 10 mehrere entlang einer Umfangsrichtung 14 angeordnete Statorzähne 12 auf, die sich in axialer Richtung erstrecken. Die Statorzähne 12 sind untereinander durch Nuten 15 getrennt.

In den Nuten 15 sowie Statorzähne 12 umschlingend umfasst der Stator 10 des Weiteren eine oder mehrere Wicklungen 20 von elektrischen Leitern. Diese Wicklungen sind entlang einer generellen Wicklungsrichtung 21, die entlang der Umfangsrichtung 14 verläuft, an den Statorzähnen 12 platziert.

An der radialen Innenseite der Statorzähne 12 sowie an deren radialer Außenseite bilden die Wicklungen 20 Wickelköpfe 22.

Figur 2 zeigt den gleichen Aufbau wie Figur 1, jedoch in Explosionsdarstellung. Der Rotor 2 ist mittig zwischen zwei Statoren 10 angeordnet, wobei jeder Stator 10 eine Wicklung 20 hat, welche als Wellenwicklung ausgeführt ist.

Die vorliegende Erfindung ist jedoch nicht auf die dargestellte Bauform einer Axialflussmaschine eingeschränkt, sondern sie kann auch als H-Type, oder einseitige Axialflussmaschine mit nur einem Stator und nur einem Rotor ausgeführt sein.

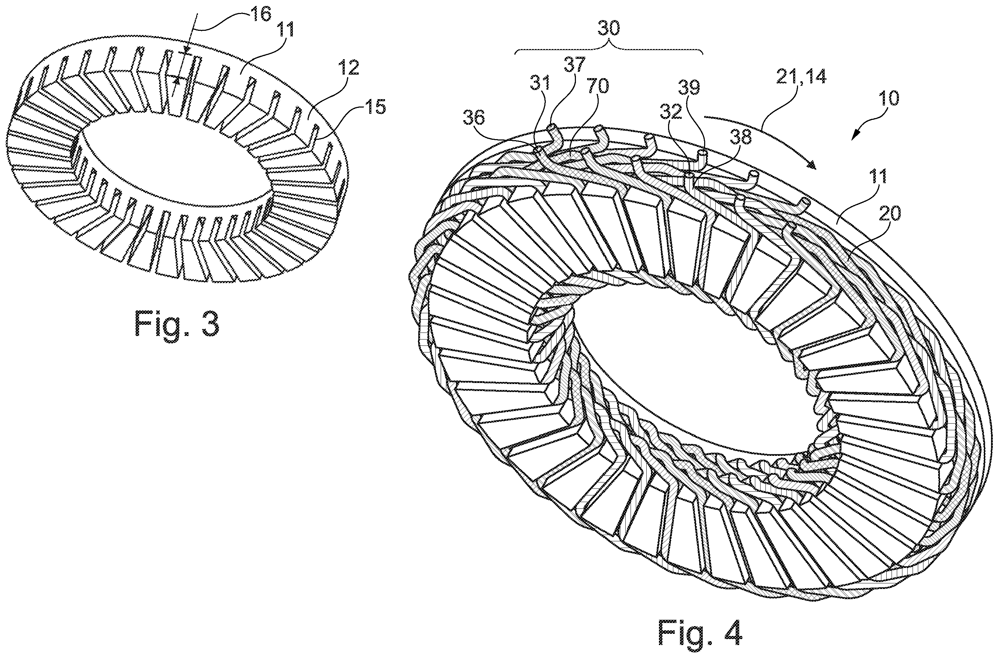

Figur 3 zeigt in perspektivischer Ansicht einen Statorkörper 11. Deutlich ersichtlich sind hierbei die Nuten 15 bzw. deren Tiefe 16.

Wie Figur 4 verdeutlicht, sieht die erfindungsgemäße Ausgestaltung des Stators vor, dass in den Nuten 15 lineare Leiterabschnitte 33 von wenigstens einem Leiterpaar 30 angeordnet sind, welches zumindest einen Anteil von Wicklungen 20 des Stators ausbildet, wobei in einer jeweiligen Nut 15 lineare Leiterabschnitte 33 des Leiterpaars 30 entlang der Tiefe 16 der Nut 15 zueinander parallel versetzt angeordnet sind und die Reihenfolge der Anordnung der parallelen Leiterabschnitte 33 in jeder Nut 15, durch die die Leiter verlaufen, entlang der Umfangsrichtung 14 alterniert.

Ein Leiterpaar ist in Figur 4 durch den ersten Leiter 31 und den zweiten Leiter 32 verdeutlicht.

Abweichend von der hier gezeigten Ausführungsform können die linearen Leiterabschnitte 33 auch gekrümmt bzw. säbelförmig ausgeführt sein. Zur begrifflichen Klarstellung werden allerdings auch derart geformte Leiterabschnitte im Folgenden unter dem Begriff "lineare Leiterabschnitte" subsumiert.

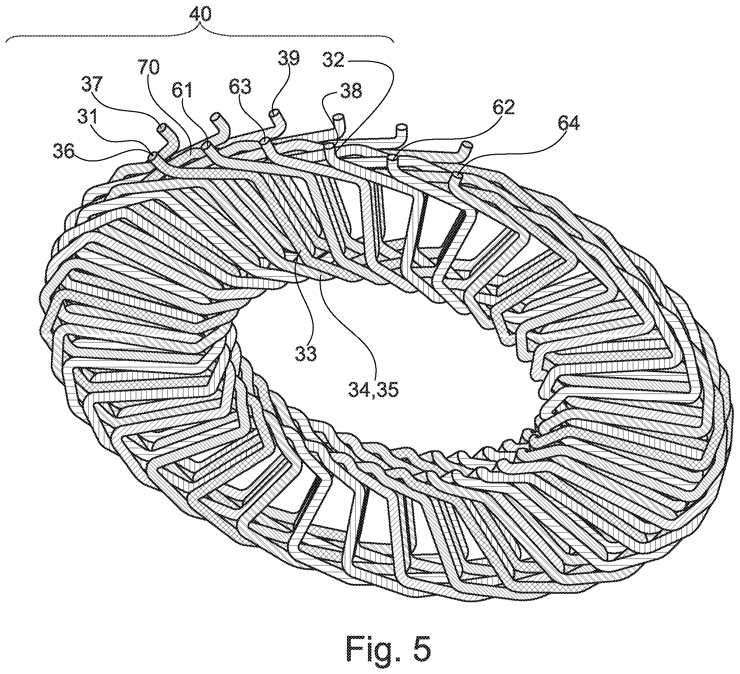

Figur 4 zeigt, dass dabei die Leiter des Leiterpaars 30 der dargestellten Wellenwicklung abweichend von der grundsätzlich in Umfangsrichtung 14 verlaufenden Wicklungsrichtung 21 in einer senkrecht zur Umfangsrichtung 14 verlaufenden Richtung bzw. in radialer Richtung mäandern. Dies führt dazu, dass die Leiter des Leiterpaares 30 mit Umschlingungen 34, wie in Figur 5 verdeutlicht, jeweils eine Gruppe von Statorzähnen 12 umschlingen.

Die Leiter des Leiterpaares 30 werden dabei in unterschiedlichen Umfangsrichtungen stromdurchflossen. Dies wird anhand des ersten Leiterpaares 30 erläutert.

Ein erste Leiter 31 des Leiterpaares 30 wird zu diesem Zweck als Plus-Leiter bezeichnet. Ein zweiter Leiter 32 des Leiterpaares 30 wird zu diesem Zweck als Minus-Leiter bezeichnet.

Der erste Leiter 31 bildet einen ersten Anschluss 36 des Plus-Leiters und einen zweiten Anschluss 37 des Plus-Leiters aus.

Der zweite Leiter 32 bildet einen ersten Anschluss 38 des Minus-Leiters und einen zweiten Anschluss 39 des Minus-Leiters aus.

Die genannten Leiter sind dafür eingerichtet, an entsprechende drei Phasen angeschlossen zu werden, mit einer Plus-Wicklung und einer Minus-Wicklung je Phase.

Ein jeweiliger Leiter 31,32 des Leiterpaares 30 umschlingt eine Gruppe 13 von Statorzähnen 12 an unterschiedlichen radialen Seiten, so dass der Stromfluss in einer jeweiligen gemeinsamen Nut 15 in beiden Leitern 31,32 entlang derselben Richtung erfolgt.

Es ist hier ersichtlich, dass der Stator 10 dabei nicht nur ein Leiterpaar umfasst, sondern drei Leiterpaare, wobei ein dritter Leiter 61 und ein vierter Leiter 62 das zweite Leiterpaar bilden, und ein fünfter Leiter 63 sowie ein sechster Leiter 64 das dritte Leiterpaar bilden.

In einer jeweiligen Nut 15 sind jedoch immer nur Abschnitte von Leitern eines Leiterpaares angeordnet.

Zudem ist aus Figur 4 ersichtlich, dass die Leiter eines Leiterpaares hinsichtlich der axialen Reihenfolge, in der sie in einer Nut 15 angeordnet sind, alternieren.

Zur besseren Verdeutlichung des Verlaufs der Leiter zeigt Figur 5 das erzeugte Wicklungspaket ohne die Statorzähne.

Hier sind noch einmal deutlich sämtliche Leiter in perspektivischer Ansicht ersichtlich. Des Weiteren ist erkennbar, dass ein jeweiliges Leiterpaar 30 jeweils eine Gruppe 13 von Statorzähnen 12 umschlingt, die jeweils drei Statorzähne 12 umfasst.

Durch die alternierende Anordnung der Leiter eines jeweiligen Leiterpaares 30 in den Nuten 15 ist es notwendig, dass sich diese Leiter kreuzen. Zu diesem Zweck bilden die Leiter verbindende Leiterabschnitte 35 aus, die die linearen Leiterabschnitte 35 miteinander verbinden und dafür sorgen, dass der jeweilige Leiter zwischen den Nuten 15, in denen der betreffende Leiter verläuft, zwischen zwei Anordnungsebenen hin und her verläuft.

Für die dargestellten drei Phasen belegt eine Phase jeweils jede dritte Nut 15.

Die axial erste Leiter-Lage in einer betreffenden Nut 15 ist jeweils alternierend mit einer Plus- oder einer Minus-Phase belegt. Dabei kann eine Lage auch aus mehreren diskreten Einzeldrähten bestehen.

In den Figuren 4 und 5 ist die Wicklung 20 mit der Ausbildung von zwei sogenannten Doppellagen 60 gezeigt. Eine Doppellage 60 bezeichnet dabei den Verlauf eines Leiters in zwei zueinander parallel verlaufenden Ebenen. Entsprechend umfassen zwei Doppellagen 60 vier Ebenen.

Um den Leitern des Leiterpaares 30 diesen Verlauf in den vier Ebenen zu ermöglichen bilden die Leiter jeweils einen Übergangsabschnitt 70 aus, wie exemplarisch anhand des ersten Leiters 31 dargestellt ist. Diese Übergangsabschnitt 70 ermöglicht, dass der erste Leiter 31 aus einer zweiten Ebene in eine dritte Ebene führt.2

Ein derartiger Übergangsabschnitt 70 wird auch als Lagensprung bezeichnet.

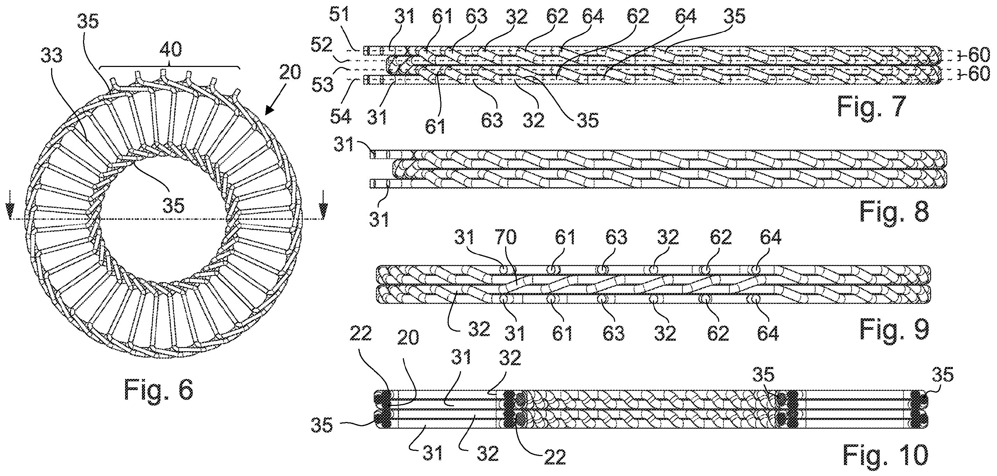

Figur 6 zeigt noch einmal die realisierte Wicklung 20 in Seitenansicht. Deutlich ist dabei zudem ein am Umfang realisierter gemeinsamer Anschlussbereich 40 der Leiter ersichtlich.

Figur 7 zeigt deutlich die Anordnung der Leiter 31, 61, 63, 32, 62, 64 in unterschiedlichen Ebenen, nämlich in einer ersten Ebene 51, einer zweiten Ebene 52, einer dritten Ebene 53 und einer vierten Ebene 54.

Des Weiteren sind hier die verbindenden Leiterabschnitte 35 erkennbar, die dafür sorgen, dass die Leiter 31, 61, 63, 32, 62, 64 jeweils zwischen der ersten Ebene 51 und der zweiten Ebene 52 wechseln können, sowie zwischen der dritten Ebene 53 und der vierten Ebene 54 wechseln können.

Figur 8 zeigt dieselbe Wicklung 20 in der gleichen Seitenansicht wie Figur 7, nur ohne Verdeutlichung des Verlaufs der Ebenen.

Figur 9 zeigt eine Draufsicht auf die in Figur 6 dargestellte Wicklung 20 hier sind die Übergangsabschnitte 70 erkennbar, die den ersten Leiter 31 und den zweiten Leiter 32 von der zweiten Ebene 52 in die dritte Ebene 53 bringen.

Figur 10 zeigt eine Schnittdarstellung gemäß dem in Figur 6 angedeuteten Schnittverlauf. Auch hier sind im Schnitt die verbindenden Leiterabschnitte 35 erkennbar, die für die Kreuzung der Leiter dienen, und dabei gleichzeitig einen Anteil der Wickelköpfe 22 ausbilden.

Hier ist zudem ersichtlich, dass die Wickelköpfe 22 derart ausgeführt werden können, dass sie nicht oder nur unwesentlich breiter sind als die Breite einer betreffenden Nut 15 und entsprechend einen geringen axialen Platzbedarf haben.

Zudem sind die Wickelköpfe 22 aber auch radial flach ausgeführt, sodass damit ausgestattete Axialflussmaschinen im drehmoment-aktiven Bereich einen größeren Radius realisieren können.

Dieses Prinzip für die Gestaltung einer Wellenwicklung kann auch für Radialflussmaschinen verwendet werden.

Dargestellt ist somit eine Wicklung 20 mit zwei Doppellagen 60, welche insgesamt vier Lagen bzw. Ebenen 51,52, 53,54 in axialer Richtung belegen. Es wird hierfür eine gerade Anzahl Lagen bzw. Ebenen benötigt. Da jeweils zwei Lagen bzw. Ebenen einen gemeinsamen Aufbau darstellen, werden zwei zusammengehörige Lagen als eine Doppellage 60 bezeichnet.

Die hier dargestellten Ebenen 51,52, 53,54 müssen dabei nicht zwingend plan bzw. eben sein. Um z.B. einem konischen Rotor zu folgen, könnten diese Ebenen 51,52, 53,54 auch konisch ausgeführt sein.

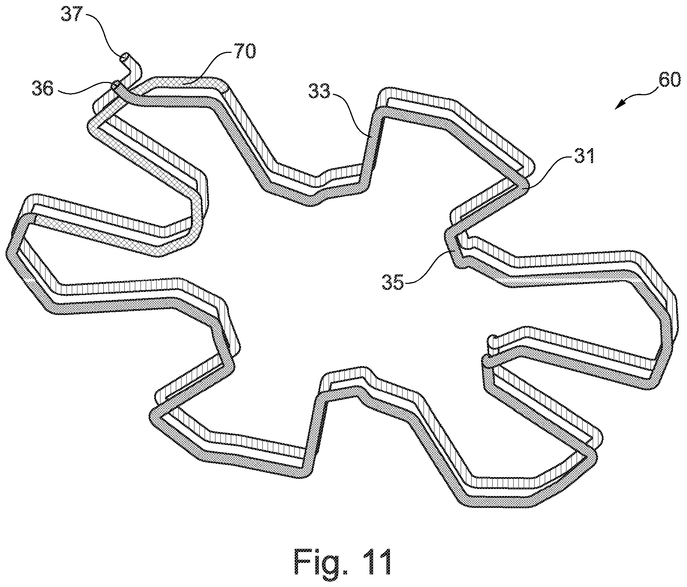

Zur Verdeutlichung eines jeweiligen Leiterverlaufs zeigt Figur 11 in einzelner, perspektivischer Darstellung den ersten Leiter 31 für eine Phase in einer Wicklung mit zwei Doppellagen. Es ist ersichtlich, dass sich an die linearen Abschnitte 33 jeweils verbindende Leiterabschnitte 35 anschließen, die den ersten Leiter 31 zwischen einzelnen Anordnungs-Ebenen hin und her führen. Nach Vollendung einer Umdrehung, ausgehend von einem ersten Anschluss 36, realisiert der erste Leiter 31 einen Übergangsabschnitt 70, der den ersten Leiter 31 axial hinter die bereits ausgeführte Windung bringt. Dort verläuft der erste Leiter wiederum in einer Umdrehung, bis er an seinem zweiten Anschluss 37 endet. Der erste Anschluss 36 und der zweite Anschluss 37 befinden sich dabei im Wesentlichen im selben Winkelbereich.

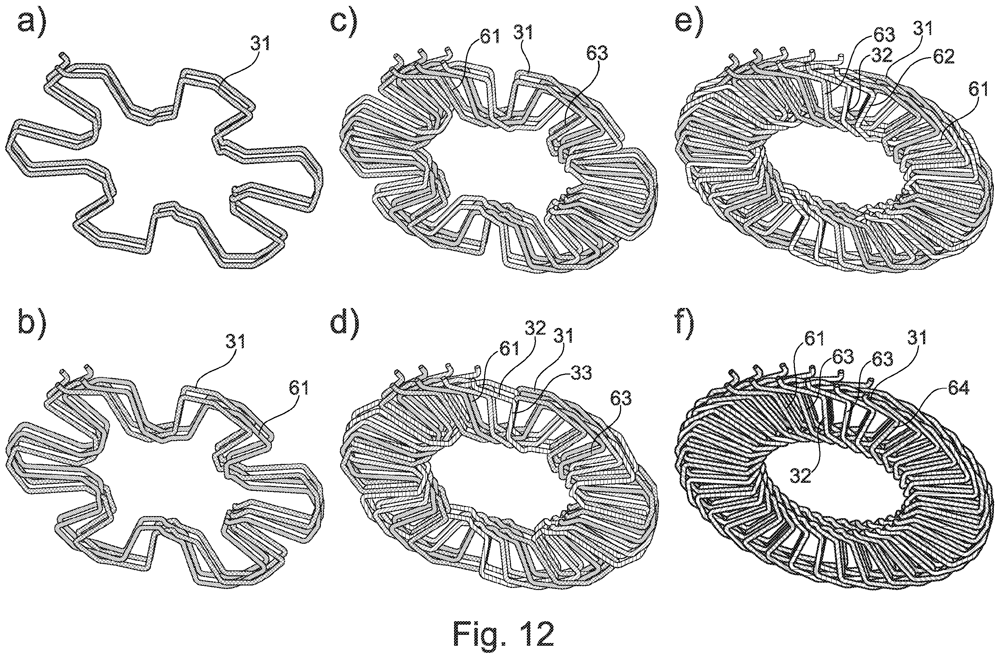

Figur 12 zeigt in 6 Teildarstellungen a) bis f) die Realisierung der Gesamt-Wicklung. Teildarstellung a) zeigt dabei den ersten Leiter 31, wie er schon in Bezug auf Figur 11 erläutert wurde. Teildarstellung b) zeigt den ersten Leiter 31 und einen dritten Leiter 61. Teildarstellung c) zeigt den ersten Leiter 31, den dritten Leiter 61 sowie einen fünften Leiter 63. Diese Leiter bilden beispielsweise alle einen sogenannten Plus-Leiter der jeweiligen Phase aus. Teildarstellung d) zeigt neben den in Teildarstellung c) dargestellten Leitern nun auch die Anordnung des zweiten Leiters 32, der zur selben Phase wie der erste Leiter 31 gehört. Wie bereits beschrieben ist auch hier ersichtlich, dass lineare Leiterabschnitte 33 des ersten Leiters 31 und des zweiten Leiters 32 derart angeordnet sind, dass sie gemeinsam in Nuten platziert werden können.

Teildarstellung e) zeigt alle bereits in Teildarstellung d) gezeigten Leiter und zusätzlich noch einen vierten Leiter 62, der zusammen mit dem dritten Leiter 61 ein zweites Leiterpaar ausbildet. Teildarstellung f) zeigt alle bereits in Teildarstellung e) gezeigten Leiter und zusätzlich noch einen sechsten Leiter 64, der zusammen mit dem fünften Leiter 63 ein drittes Leiterpaar ausbildet. Zudem zeigt Teildarstellung f), dass die Wickelköpfe 22 in etwa so breit sind wie die axiale Länge, welche für die Leiter in den Nuten benötigt wird.

In den Figuren 7 bis 10 ist jeweils eine Wicklung 20 mit zwei Doppellagen 60 gezeigt, jedoch kann die Wicklung 20 auch aus nur einer Doppellage bestehen oder auch mehr als zwei Doppellagen haben. Der zweite Leiter 32, der vierte Leiter 62 und der sechste Leiter 64 bilden jeweils die sogenannten Minus-Leiter aus.

In den Figuren 6 bis 10 ist weiterhin ersichtlich, dass an die linearen Leiterabschnitte 33, welche in den Nuten 15 verlaufen, sich jeweils verbindende Leiterabschnitte 35 anschließen, welche - bei Ausführung des Stators in I-Anordnung - den radialen Abstand zum Statorkern erhöhen und gleichzeitig einen Teil des Abstandes zur nächsten zur selben Phase gehörigen Nut 15 in Umfangsrichtung überbrücken, und das am radial inneren als auch am radial äußeren Wickelkopf 22. Da sich die zu verbindenden linearen Leiterabschnitte 33 einer Doppellage auf unterschiedlichen Lagen bzw. Ebenen befinden, führt der verbindende Leiterabschnitt 35 auch gleich den notwendigen Lagenwechsel durch.

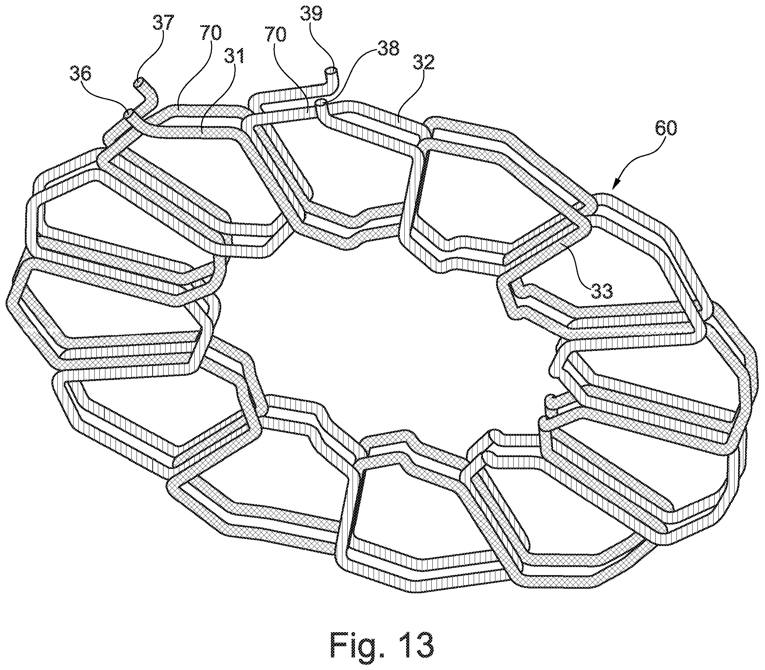

Zur Verdeutlichung eines Leiterpaares 30 ist in Figur 13 noch einmal der Verlauf des ersten Leiters 31 und des zweiten Leiters 32 gezeigt. Hier ist ersichtlich, dass die linearen Leiterabschnitte 33 einander entlang der axialen Richtung überlagern, sodass sie gemeinsam in Nuten dargestellt werden können. Des Weiteren ist erkennbar, dass jeder der beiden hier dargestellten Leiter 31,32 jeweils einen Übergangsabschnitt 70 bzw. Lagensprung ausbildet.

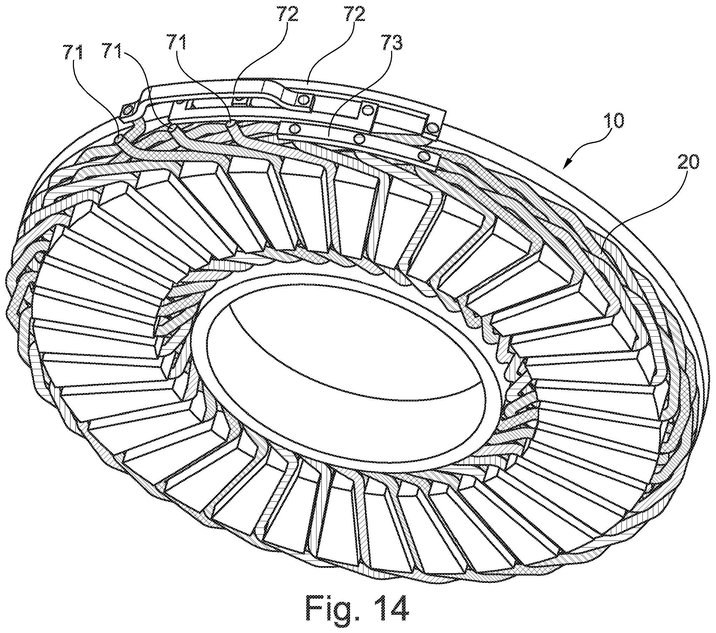

Figur 14 zeigt den Stator 10 mit der Wicklung 20 und einer entsprechenden elektrischen Verschaltung.

Dabei zeigt Figur 14 eine vorteilhafte Verschaltung der Plus- und Minus-Wicklungen, so dass sich eine Sternverschaltung der Wicklungen ergibt mit drei Anschlüssen für eine Verbindung zur Leistungselektronik. Die Phasenversorgung bzw. der Anschluss an die Leistungselektronik erfolgt über die ersten Anschlüsse der Plus-Wicklungen, auch Plus-Anschlüsse 71 genannt. Die einzelnen zweiten Anschlüsse der Plus-Wicklungen werden jeweils einzeln mit den zweiten Anschlüssen der zugehörigen Phase der Minus-Wicklungen verbunden. Die ersten Anschlüsse 73 der Minus-Wicklungen werden zu einer Sternverschaltung zusammengeschaltet. Durch diese Verschaltung ist sichergestellt, dass die Plus- und Minus-Wicklungen einer Phase so verschaltet sind, dass die Leiterstücke in den Nuten die gleiche Stromrichtung aufweisen. Im Vergleich zu einer Hairpin-Wicklung, bei der für den Leiter in einer Nut eine Verbindung hergestellt werden muss, reduziert sich hier der Verschaltungsaufwand auf vier Verbindungsstellen je Phase.

Alternativ kann auch der dargestellte Anschluss für eine Serienverschaltung 72 genutzt werden. Abweichend von den hier dargestellten Ausführungsbeispielen kann der erfindungsgemäß ausgeführte Stator auch für mehr oder weniger als 3 Phasen ausgeführt sein.

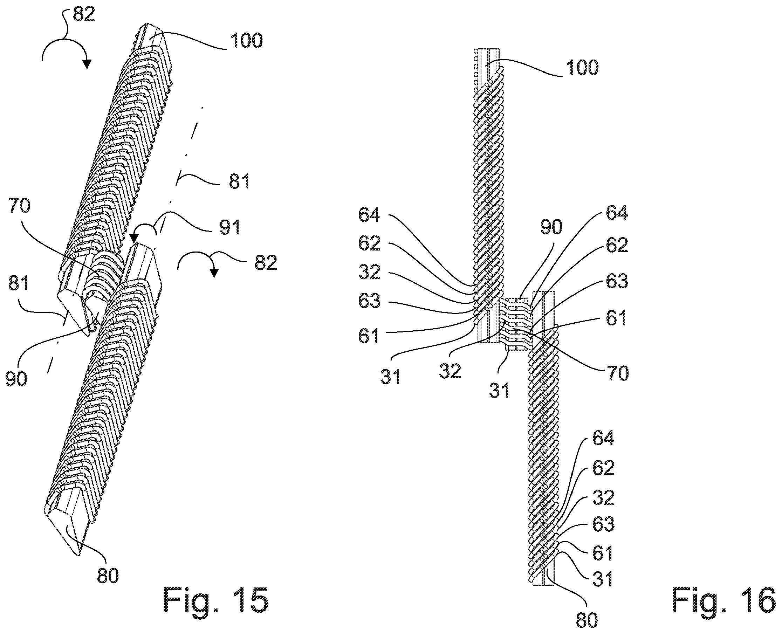

Die Figuren 15-26 beziehen sich auf die Ausführungsform des erfindungsgemäßen Verfahrens zur Herstellung einer Wicklung des Stators.

Das hier beschriebene Verfahren bezieht sich auf die Herstellung von Wicklungen in zwei Doppellagen.

Dafür werden, wie in den Figuren 15-18 gezeigt, ein erstes Schwert 80, ein zweites Schwert 90 und ein drittes Schwert 100 derart ausgerichtet, dass ihre Längsachsen im Wesentlichen parallel zueinander verlaufen. Das erste Schwert 80 ist dazu eingerichtet, Windungen einer ersten Doppellage zu erzeugen. Das dritte Schwert 100 ist dazu eingerichtet, Windungen einer zweiten Doppellage zu erzeugen.

Die Schwerter weisen jeweils eine Geometrie auf, welche die späteren Prozessschritte des Biegens zu einer abgeflachten Matte und des Biegens in Kreisform begünstigen.

Wie die Figuren 15 und 16 in unterschiedlichen Ansichten verdeutlichen, werden um das erste Schwert 80 entlang einer ersten Wickelrichtung 82, hier im mathematisch positivem Sinn, der erste Leiter 31, der zweite Leiter 32, der dritte Leiter 61, der vierte Leiter 62, der fünfte Leiter 63 und der sechste Leiter 64 gewunden. Es bietet sich an, dabei das erste Schwert 80 um seine Längsachse 81 zu drehen und zu verschieben, so dass folgende Windungen neben bereits vorhandene Windungen auf das erste Schwert 80 gelangen.

Bezüglich des Leiterpaares, welches den ersten Leiter 31 und den zweiten Leiter 32 umfasst und die erste Phase ausbildet, ist zu erwähnen, dass sich zwischen dem ersten Leiter 31 und dem zweiten Leiter 32 noch der dritte Leiter 61 sowie der fünfte Leiter 63 befinden, die jedoch zur zweiten Phase und zur dritten Phase gehören.

Während des Wickelns auf das erste Schwert 80, ist das zweite Schwert 90 noch nicht in Position gebracht worden, so dass dieses den Wickelprozess am ersten Schwert 80 nicht stört. Das zweite Schwert 90 wird erst positioniert, wenn die erforderlichen Windungen auf dem ersten Schwert 80 erzeugt worden sind. Nach Ausführung der notwendigen Anzahl von Windungen wird das zweite Schwert 90 neben dem ersten Schwert 80 positioniert und die Wickelrichtung für ca. eine halbe Umdrehung umgekehrt. Derart werden die Leiter über das zweite Schwert 90 in einer zweiten Wickelrichtung 91 geführt, die zur ersten Wickelrichtung 82 entgegengesetzt verläuft.

Durch die Umkehrung der Wickelrichtung werden die Leiter für den Lagensprung vorgebogen. Danach erfolgt wiederum eine Aufwicklung der genannten Leiter entlang der ersten Wickelrichtung 82 auf dem dritten Schwert 100, welches nach der genannten halben Rückwärtsdrehung positioniert wird. Falls weitere Doppellagen benötigt werden, so wird entsprechend die Anzahl der Schwerter und der durchgeführten Wicklungen vergrößert. Bei mehr als zwei Lagensprüngen bzw.

Übergängen zwischen Doppellagen können weitere zweite Schwerter zum Einsatz kommen. Nach der Erzeugung der Wicklungen können die gewickelten Leiter zu einer Wickelmatte zusammengedrückt werden, so dass diese Wickelmatte in etwa die axiale Erstreckung hat wie die Tiefe der Nuten des Statorkörpers, in dem die Wicklung bzw. Wicklungen aufgenommen werden sollen. Diese Wickelmatte kann noch in eine Kreisringform gebogen werden, um das Einsetzen in die Nuten des Statorkerns zu erleichtern.

Die Durchführung des Verfahrens ist dabei nicht zwingend auf die Reihenfolge der oben genannten Schritte eingeschränkt.

Zur Ausführung einer Wickelmatte mit nur einer Doppellage kann auf die Verwendung des zweiten Schwerts 90 und des dritten Schwerts 100 verzichtet werden.

Das vorliegende Verfahren kann auch zur Herstellung von Wicklungen für Radialflussmaschinen verwendet werden.

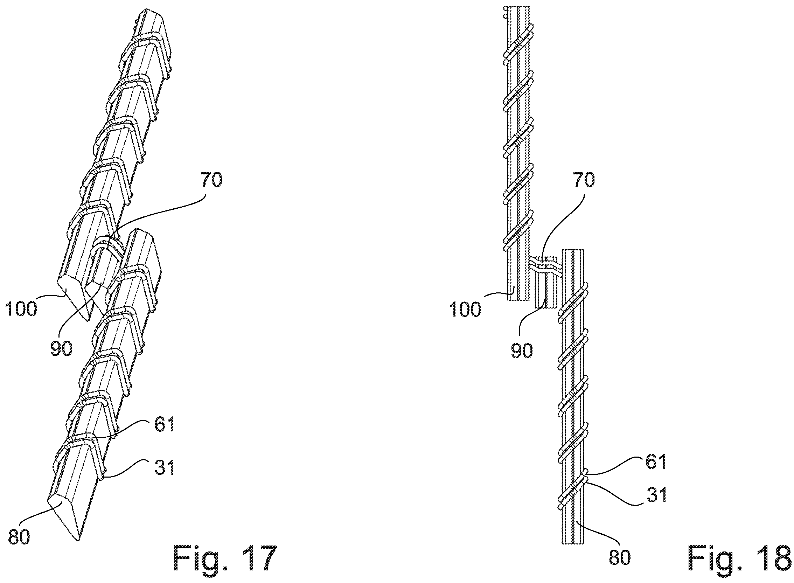

Zur vereinfachten Erläuterung des Verfahrensablaufs sind in den Figuren 17 und 18 die Wickelprozesse exemplarisch anhand von lediglich zwei Leitern von 2*n-Leitern, nämlich dem ersten Leiter 31 und dem dritten Leiter 61 dargestellt.

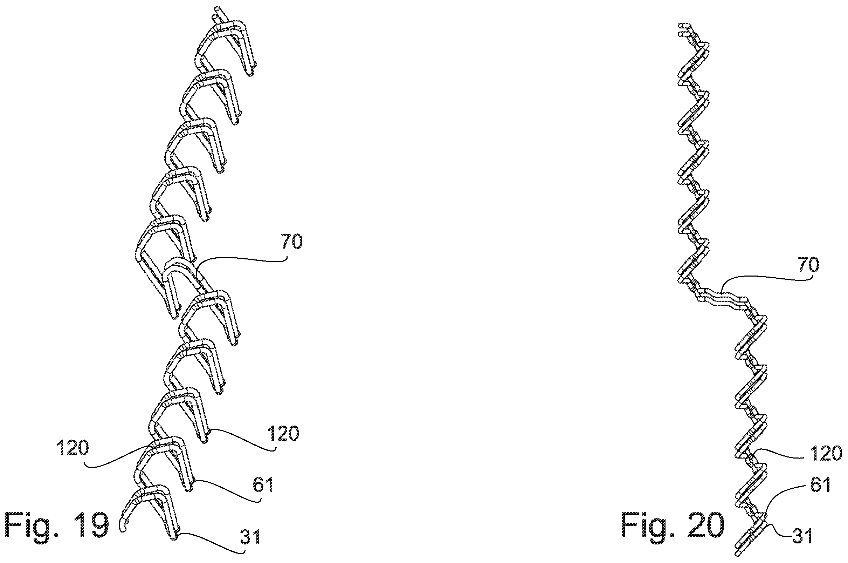

Hier ist zudem deutlich ersichtlich, dass durch die Umschlingung des zweiten Schwerts 90 mit diesen Leitern 31, 61 dieses zwei Übergangsabschnitte 70 ausbilden. Die Figuren 19 und 20 zeigen die erzeugten Wicklungen 20, nachdem die Schwerter herausgezogen wurden. Es ist ersichtlich, dass sich die Windungsstruktur erhalten hat und auch die Überbrückungsabschnitte 70 ausgebildet sind.

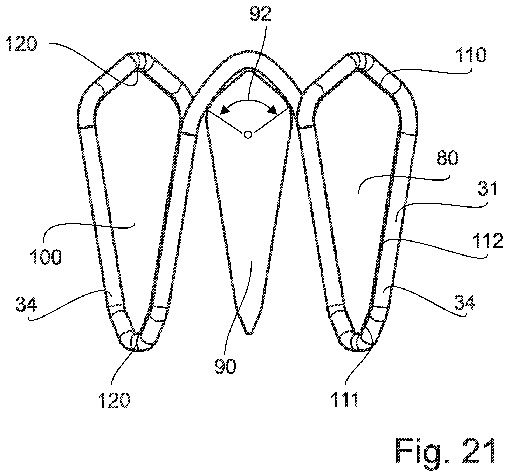

Figur 21 zeigt die 3 Schwerter 80,90, 100 in frontaler Ansicht bei der Umwicklung mit dem ersten Leiter 31. Es ist ersichtlich, dass der erste Leiter 31 das erste Schwert 80 sowie auch das dritte Schwert 100 vollständig umschlingt. Das zweite Schwert 90, welches sich zwischen dem ersten Schwert 80 und dem dritten Schwert 100 befindet, wird jedoch nur an dessen Oberseite in einem begrenzten Umschlingungswinkel 92 umschlungen. Entsprechend bilden die Umschlingungen des ersten Schwerts 80 und des dritten Schwerts 100 sowohl an einer ersten Umschlingungsseite 110 als auch an einer dieser ersten Umschlingungsseite 110 gegenüberliegenden zweiten Umschlingungsseite 111 Umschlingungen aus. An ebenen Seitenflächen 112 der Schwerter 80,100 wird der erste Leiter 31 im Wesentlichen linear geführt.

Es ist ersichtlich, dass, bei Gleichsetzung der erzeugten Wicklung mit einer harmonischen Schwingung, die erste Umschlingungsseite 110 einen Extremwertbereich 120 ausbildet und die zweite Umschlingungsseite 111 einen gegenüberliegenden Extremwertbereich 120 ausbildet.

In den einander gegenüberliegenden Extremwertbereichen 120 ist die Wicklung mit unterschiedlicher Breite ausgeführt, um deren Form daran anzupassen, dass der Abstand der Nuten im Statorkörper an der radialen Außenseite größer ist als an der radialen Innenseite.

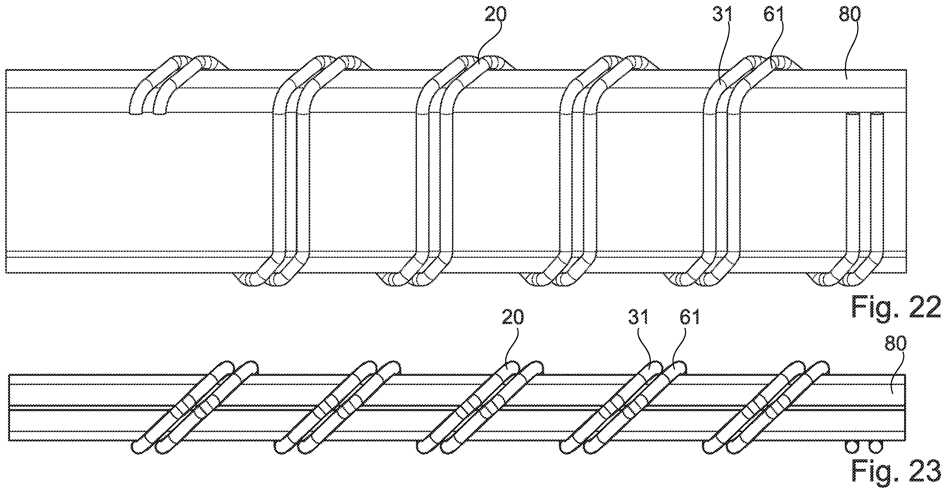

Die Figuren 22 und 23 zeigen noch einmal die Wicklung 20 um das erste Schwert 80, in unterschiedlichen Ansichten.

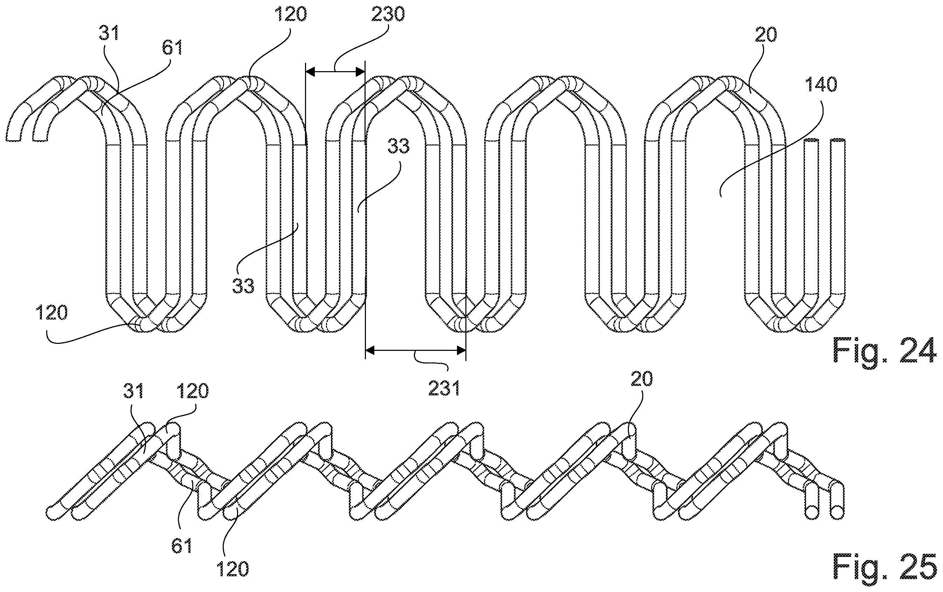

Fig. 24 zeigt die erzeugte Wicklung 20 in Ansicht von der Seite und Fig. 25 zeigt die erzeugte Wicklung 20 in Draufsicht. Insbesondere in Figur 24 sind dabei sehr gut die Extremwertbereiche 120 erkennbar, die durch die Wicklung 20 ausgebildet werden. Weiterhin ist ersichtlich, dass jeder der beiden Leiter 31,61 Maschen 140 ausbildet.

Ersichtlich ist hier auch, dass der Abstand der linearen Leiterabschnitte 33 innerhalb eines Wellenabschnittes in alternierender Weise durch einen ersten Abstand 230 und einen zweiten Abstand 231 voneinander beabstandet sind, wobei der zweite Abstand 231 größer ist als der erste Abstand 230. Hierdurch wird dem Rechnung getragen, dass die äußeren Wickelköpfe größere Abstände in Umfangsrichtung überbrücken müssen als die inneren Wickelköpfe. Falls dieses Verfahren für die Statorwicklungen einer Radialflussmaschine verwendet wird, so sind die Abstände für die beiden Wickelköpfe ähnlich. Eventuell ändern sich diese mit dem Radius, auf dem die Wickellage liegt, indem die nacheinander verwendeten Schwerter für die einzelnen Doppellagen entsprechend unterschiedlich breit ausgeführt werden.

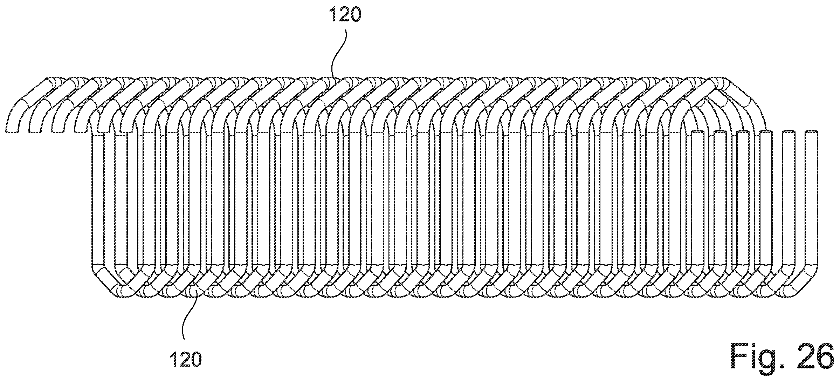

Figur 26 zeigt eine Wicklung, welche alle sechs, die drei Phasen ausbildenden Leiter umfasst.

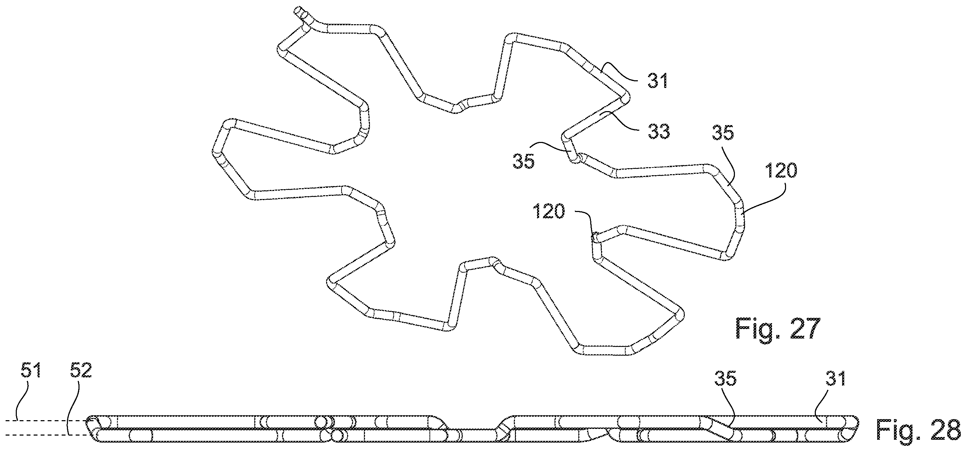

Die Figuren 27-38 beziehen sich auf eine weitere Ausführungsform des Verfahrens zur Herstellung einer Wicklung des Stators.

In Figur 27 ist beispielhaft der erste Leiter 31 in einer Doppellage dargestellt. Es sind noch einmal die einzelnen Abschnitte des ersten Leiters 31 ersichtlich, nämlich die linearen Leiterabschnitte 33 sowie auch die verbindenden Leiterabschnitte 35 und in den radial am weitesten innen und außen vorhandenen Abschnitten die Extremwertbereiche 120.

Figur 28 zeigt in einer Seitenansicht deutlich, dass die verbindenden Leiterabschnitte 35 dafür sorgen, dass der erste Leiter 31 zwischen einer ersten Ebene 51 und einer zweiten Ebene 52 alternierend verläuft.

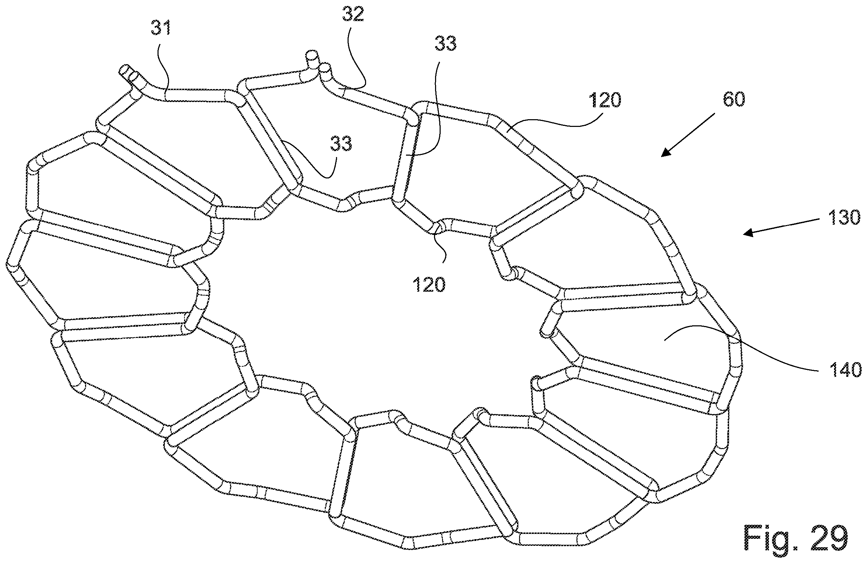

Figur 29 zeigt ein Geflecht 130, welches durch den ersten Leiter 31 und den zweiten Leiter 32 ausgebildet ist, so dass diese zusammen eine Plus- und eine Minus-Phase ergeben. Diese beiden Leiter 31,32 bilden dabei mehrere Maschen 140 aus. Es ist ersichtlich, dass beide Leiter 31,32 wechselseitig in den beiden Anordnungsebenen geführt werden. Das bedeutet, dass die linearen Leiterabschnitte 33 der beiden Leiter 31,32 wechselseitig axial vorne angeordnet sind und axial hinten angeordnet sind.

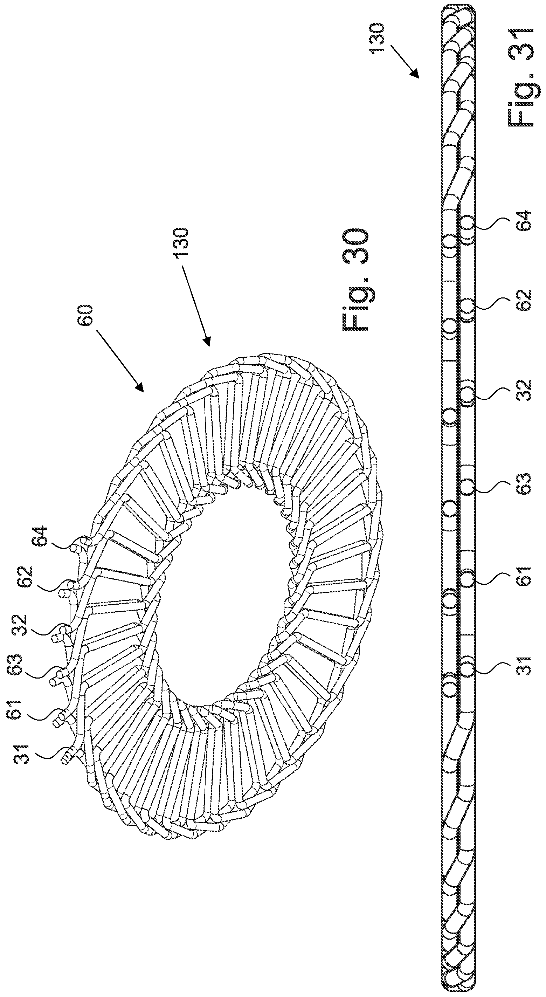

Figur 30 zeigt nun ein Geflecht 130 welches in der zu Figur 29 beschriebenen Art und Weise um einen dritten Leiter 61, einen vierten Leiter 62, einen fünften Leiter 63 und einen sechsten Leiter 64 ergänzt wurde. Diese für den Anschluss von drei Phasen eingerichteten sechs Leiter ergeben zusammen eine komplette Doppellage.

Figur 31 zeigt dieses Geflecht 130 in Ansicht von oben.

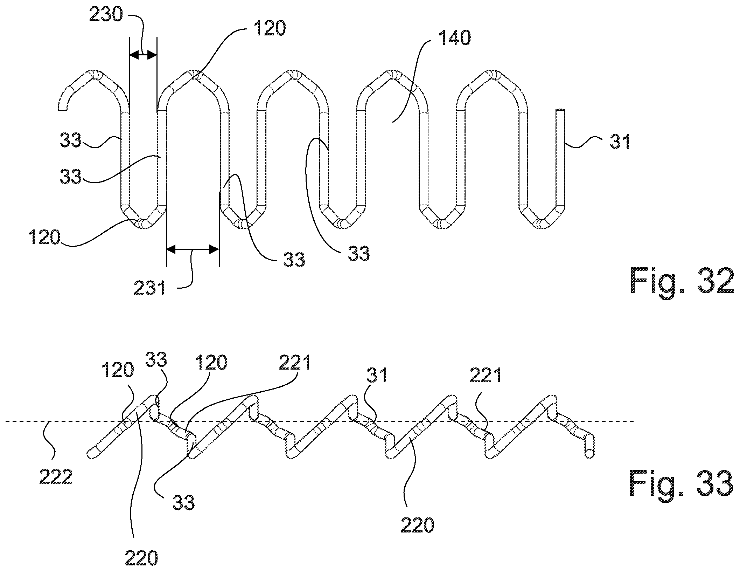

Anhand der Figuren 32-35 wird nun die Vorgehensweise zur Herstellung eines derartigen Geflechts erläutert.

Wie in Figur 32 dargestellt ist, wird zunächst ein erster Leiter 31 zur Verfügung gestellt, der in einer Mäander-Form bzw. Zickzackform vorliegt. Erkennbar ist hier, dass zwischen benachbarten linearen Leiterabschnitten 33 jeweils alternierend ein erster Abstand 230 sowie ein zweiter Abstand 231 realisiert sind, wobei der zweite Abstand 231 größer ist als der erste Abstand 230. Dies führt zu unterschiedlichen Breiten der dadurch ausgebildeten, nach oben und nach unten offenen Maschen 140.

Figur 33 verdeutlicht, dass der hier dargestellte erste Leiter 31 jedoch nicht nur in einer Ebene mäandert, sondern auch in der senkrecht dazu verlaufenden Ebene, so das der erste Leiter 31 ansatzweise eine Schraubengangform bzw. eine räumliche Spirale ausbildet. Diese räumliche Spirale kann bei einer praktischen Umsetzung auch deutlich flacher als in Figur 33 dargestellt ausgeführt werden. Im Extremfall ist der Leiter in Figur 33 bereits so flach wie nach dem Einsetzen in die Nuten des Stators. Eine mittige Ebene 222 führt dabei durch die Extremwertbereiche 120. Der Leiterverlauf in Wellen- bzw. Spiralform weist bereits Merkmale auf, die die nachfolgenden Schritte zum Umformen zu einer Wicklungsmatte begünstigen. So sind die Leiterstücke für den späteren inneren Wickelkopf kürzer / kleiner ausgeführt als die Leiterstücke für den späteren äußeren Wickelkopf, so dass auch die Abstände 230,231 zwischen den Leiterstücken für die Wickelnuten alternierend unterschiedlich groß sind. Die unrunde Form der dreidimensionalen Schraubengangform ist so ausgeformt, dass in den späteren Prozessschritten folgendes Flachbiegen des Geflechts die gewünschte Kontur ergibt, zur Ausbildungen der inneren und äußeren Wickelköpfe, sowie der linearen Leiterabschnitte für die Wickelnuten.

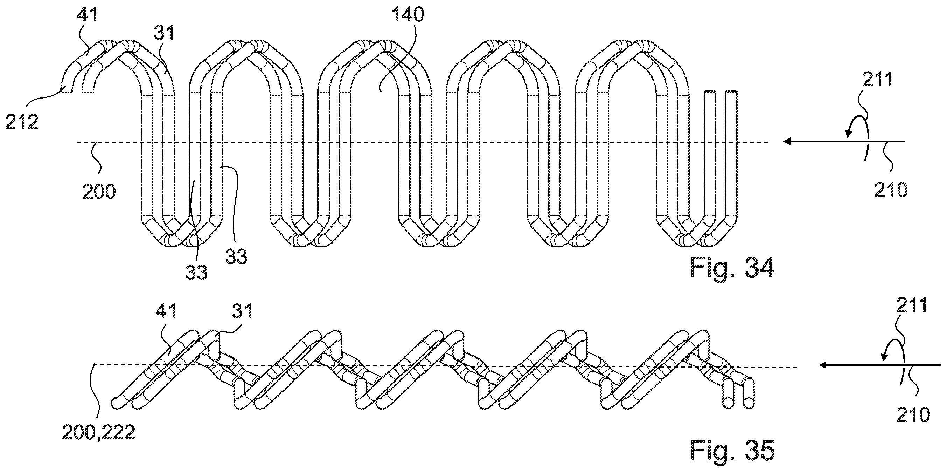

Das bedeutet, dass die Zickzackform dreidimensional ausgeführt ist, wobei bei Gleichsetzung der Zickzackform mit einer harmonischen Schwingung lineare Leiterabschnitte 33 des betreffenden Leiters, welche einen positiven Anstieg 220 aufweisen und lineare Leiterabschnitte des betreffenden Leiters, welche einen negativen Anstieg 221 aufweisen, jeweils beidseitig außerhalb einer mittig die durch Bereiche der Extremwerte 120 verlaufenden mittigen Ebene 222 angeordnet sind. Das Geflecht wird nun dadurch erzeugt, dass ein weiterer Leiter 41 einer Doppelanordnung von Leitern zur Verfügung gestellt wird, der im Wesentlichen genauso vorgeformt wurde wie der erste Leiter 31. Wie in den Figuren 34 und 35 angedeutet, wird der weitere Leiter 41 dann mit einer Kombinationsbewegung, die eine translatorische Bewegungskomponente 210 mit einer rotatorischen Bewegungskomponente 211 kombiniert, relativ zum ersten Leiter 31 bewegt, sodass sich der weitere Leiter 41 um seine Längsachse 200 dreht und gleichzeitig entlang der Längsachse 200 vorwärts bewegt wird, so dass seine Leiterspitze 212 jeweils durch die Welle des ersten Leiters 31 durchtaucht. Dadurch schlängelt sich der weitere Leiter 41 durch die Maschen 140 des ersten Leiters 31, in ähnlicher Weise wie bei der Herstellung eines Maschendrahtzauns, so dass diese mehrere ineinander gedrehte räumliche Spiralen ergeben.

Wie aus Figur 34 ersichtlich ist, kommt es dabei auch zu einer wechselseitigen Überlagerung der linearen Leiterabschnitte 33.

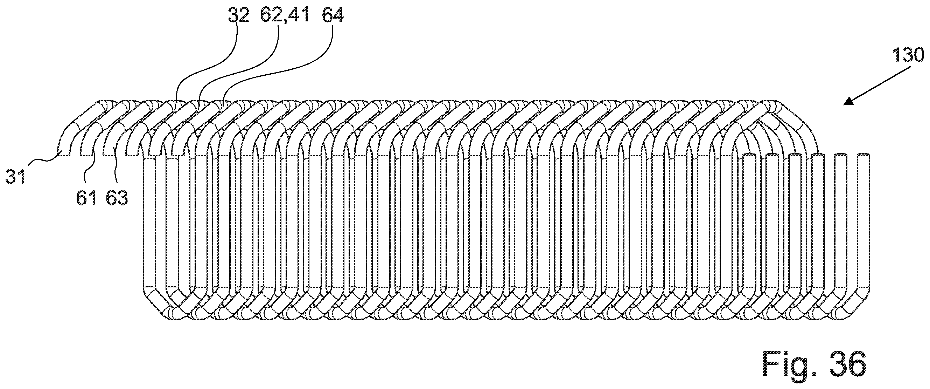

Figur 36 zeigt ein Geflecht 130, gebildet aus dem ersten Leiter 31, einem zweiten Leiter 32, einem dritten Leiter 61, einem vierten Leiter 62, einem fünften Leiter 63 und einem sechsten Leiter 64, die gemäß der vorstehenden Verfahrensweise ineinander in Eingriff gebracht wurden. Der vierte Leiter 62 und der erste Leiter 31 sind dabei in der beschriebenen Weise ineinander eingedreht worden. Das bedeutet, dass der vierte Leiter 62 dem weiteren Leiter 41 entspricht.

Die anderen hier gezeigten Leiter, also der zweite Leiter 32, der dritte Leiter 61, der fünfte Leiter 63 und der sechste Leiter 64 sind wiederum miteinander gemäß dem vorliegenden Verfahren in der gezeigten Reihenfolge verbunden worden. Entsprechend werden dadurch drei Leiterpaare zum Anschluss an drei Phasen zur Verfügung gestellt, die miteinander verflochten sind.

Abweichend von der hier dargestellten Ausführungsform können natürlich auch mehr oder weniger Leiterpaare zum Anschluss der Phasen miteinander verflochten werden.

Nach der Herstellung dieses Geflechts 130 muss dieses Geflecht 130 noch in Kreisform gebogen werden. Zudem können die dreidimensional verlaufenden Strukturen der einzelnen Leiter dieses Geflechts auch noch in der axialen Erstreckung verringert werden, so dass sie eine flache Matte ergeben bei Integration zwischen Statorzähne einen geringeren axialen Platzbedarf haben.

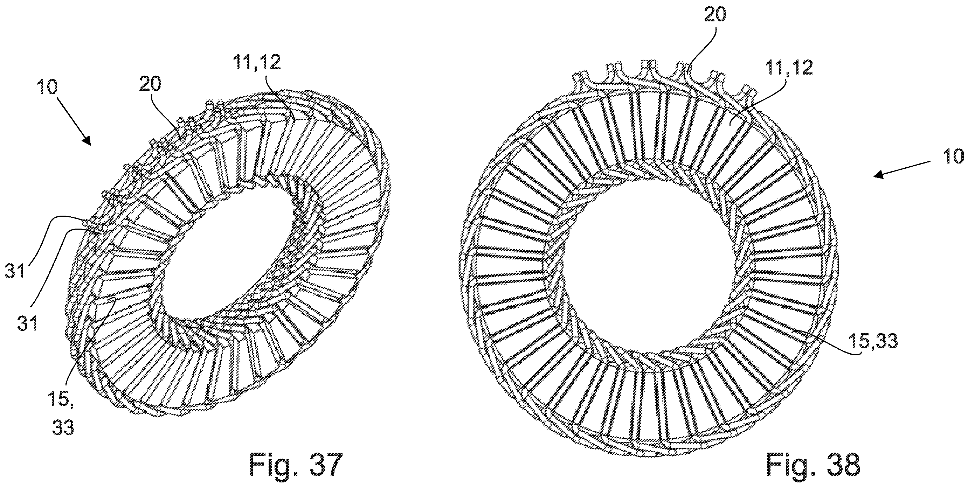

Das Verfahren ist allerdings nicht auf die Reihenfolge der oben beschriebenen einzelnen Schritte eingeschränkt. Die Figuren 37 und 38 zeigen jeweils einen Stator 10, in dessen Nuten 15 die lineare Leiterabschnitte 33 eines Geflechts aus den sechs oben genannten Leitern angeordnet sind.

Der hier dargestellte Stator 10 weist die Besonderheit auf, dass er dabei die sechs Leiter in zwei Doppellagen umfasst, die jedoch untereinander nicht durch Übergangsabschnitte, wie in Figur 5 gezeigt, verbunden sind. Beispielhaft wird dies durch die Bezeichnung von zwei ersten Leitern 31 in Figur 37 ersichtlich.

Mit dem Verfahren zur Herstellung einer Wicklung für einen Stator einer elektrischen Rotationsmaschine wird eine Lösung zur Verfügung gestellt, die es ermöglicht, die Wicklung und entsprechend auch den die Wicklung aufweisenden Stator sowie die den Stator umfassende elektrische Rotationsmaschine mit geringem Kosten- und Zeitaufwand zu fertigen.

### Bezugszeichenliste

- 1: Axialflussmaschine
- 2: Rotor
- 10: Stator
- 11: Statorkörper
- 12: Statorzahn
- 13: Gruppe von Statorzähnen
- 14: Umfangsrichtung
- 15: Nut
- 16: Tiefe der Nut
- 20: Wicklung
- 21: Wicklungsrichtung
- 22: Wickelkopf
- 30: Leiterpaar
- 31: erster Leiter
- 32: zweiter Leiter
- 33: linearer Leiterabschnitt
- 34: Umschlingung
- 35: verbindender Leitungsabschnitt
- 36: Erster Anschluss des Plus-Leiters
- 37: Zweiter Anschluss des Plus-Leiters
- 38: Erster Anschluss des Minus-Leiters
- 39: zweiter Anschluss des Minus-Leiters
- 40: gemeinsamer Anschlussbereich
- 41: weiterer Leiter
- 51: Erste Ebene
- 52: Zweite Ebene
- 53: Dritte Ebene
- 54: Vierte Ebene
- 60: Doppellage
- 61: Dritter Leiter
- 62: Vierter Leiter
- 63: Fünfter Leiter
- 64: Sechster Leiter
- 70: Übergangsabschnitt
- 71: Plus-Anschlüsse
- 72: Anschluss für Serienverschaltung
- 73: Anschluss für Sternverschaltung
- 80: erstes Schwert
- 81: Längsachse
- 82: erste Wickelrichtung
- 90: zweites Schwert
- 91: zweite Wickelrichtung
- 92: Umschlingungswinkel
- 100: drittes Schwert
- 110: erste Umschlingungsseite
- 111: zweite Umschlingungsseite
- 112: ebene Seitenfläche
- 120: Extremwertbereich
- 130: Geflecht
- 140: Masche
- 200: Längsachse des zweiten Leiters
- 210: translatorische Bewegungskomponente
- 211: rotatorische Bewegungskomponente
- 212: Leiterspitze
- 220: Abschnitt mit positivem Anstieg
- 221: Abschnitt mit negativem Anstieg
- 222: mittige Ebene
- 230: erster Abstand
- 231: zweiter Abstand

## Patentansprüche

1. Verfahren zur Herstellung einer Wicklung (20) für einen Stator (10) einer elektrischen Rotationsmaschine, bei dem
mehrere Leiter (31, 32, 61, 62, 63, 64) zur Verfügung gestellt werden und die Leiter auf einem ersten Schwert (80) entlang einer ersten Wickelrichtung (82) so aufgewickelt werden, dass die Leiter das erste Schwert (80) umschlingen, nach Erreichen einer vorgesehenen Windungszahl entlang einer zweiten Wickelrichtung (91), die der ersten Wickelrichtung (82) entgegengesetzt ist, an einem zweiten Schwert (90) so gebogen werden, dass die Leiter das zweite Schwert (90) mit verbindenden Übergangsabschnitten (70) teilweise umschlingen,
auf einem dritten Schwert (100) entlang der ersten Wickelrichtung (82) so aufgewickelt werden, dass die Leiter das dritte Schwert (100) umschlingen, und
dann die Schwerter (80,90,100) aus den dadurch erzeugten Wicklungen (20) der Leiter entfernt werden, wobei
das erste Schwert (80) und das dritte Schwert (100) jeweils eine Querschnittsform haben, die eine erste Umschlingungsseite (110) und eine zweite Umschlingungsseite (111) aufweist, wobei die erste Umschlingungsseite (110) länger ist als die zweite Umschlingungsseite (111)
**dadurch gekennzeichnet, dass**
die Umschlingungen des ersten Schwerts (80) und des dritten Schwerts (100) sowohl an der ersten Umschlingungsseite (110) als auch an der dieser ersten Umschlingungsseite (110) gegenüberliegenden zweiten Umschlingungsseite (111) Umschlingungen ausbilden, und die beiden Umschlingungsseiten (110, 111) miteinander verbunden sind, so dass Schwerter (80, 100) zur Verfügung gestellt werden, die im Profil im Wesentlichen jeweils eine Keilform ausbilden.

2. Verfahren zur Herstellung einer Wicklung nach Anspruch 1, **dadurch gekennzeichnet, dass** die Biegung der Leiter an dem zweiten Schwert (90) mit einem Umschlingungswinkel (92) an dem zweiten Schwert (90) von 100° bis 220° realisiert wird.

3. Verfahren zur Herstellung einer Wicklung nach Anspruch 1 oder 2, **dadurch gekennzeichnet, dass** die verbindenden Übergangsabschnitte (70) derart umgeformt werden, dass die im Wesentlichen in Schraubengangform vorliegenden Wicklungen (20) der Leiter jeweils zwischen zwei zueinander parallel verlaufenden Ebenen positioniert werden.

4. Verfahren zur Herstellung einer Wicklung nach einem der Ansprüche 1 bis 3, **dadurch gekennzeichnet, dass** nach Positionierung der Wicklungen (20) der Leiter zwischen zwei zueinander parallel verlaufenden Ebenen das erzeugte Geflecht (130) in seiner senkrecht zur erzeugten Nebeneinanderanordnung verlaufenden Dicke verringert wird und/ oder gebogen wird, so dass es in Kreisform verläuft.

## Claims

1. A method for producing a winding (20) for a stator (10) of an electric rotating machine, wherein
a plurality of conductors (31, 32, 61, 62, 63, 64) are provided and the conductors are wound on a first fin (80) in a first winding direction (82) such that the conductors loop around the first fin (80), after reaching an intended number of turns on the first fin (80), in a second winding direction (91) which is counter to the first winding direction (82), are bent on a second fin (90) such that the conductors partially loop with connecting transition sections (70) around the second fin (90),
are wound on a third fin (100) in the first winding direction (82) such that the conductors loop around the third fin (100), and
then the fins (80, 90, 100) are removed from the windings (20) of the conductors thereby created, the fins (80, 90, 100) being longitudinally offset and oriented such that their longitudinal axes extend substantially parallel to each other,
the first fin (80) and the third fin (100) being elongated shaping elements and each having a wedge-like cross section which has a first loop-around side (110) and a second loop-around side (111), the first loop-around side (110) being longer than the second loop-around side (111)
**characterised in that**
the loop-around portions of the first fin (80) and of the third fin (100) form loop-around portions both on the first loop-around side (110) and on the second loop-around side (111) opposite said first loop-around side (110), and the two loop-around sides (110, 111) are connected to one another so that fins (80, 100) are provided which form substantially a wedge shape in profile.

2. The method for producing a winding according to claim 1, **characterised in that** the bending of the conductors on the second fin (90) is realised with a loop-around angle (92) on the second fin (90) of 100° to 220°.

3. The method for producing a winding according to claim 1 or 2, **characterised in that** the connecting transition sections (70) are formed such that the windings (20) of the conductors, which are substantially in helical form, are each positioned between two planes extending parallel to each other.

4. The method for producing a winding according to any one of claims 1 to 3, **characterised in that**, after positioning the windings (20) of the conductors between two mutually parallel planes, the created braid (130) is reduced in terms of its thickness running perpendicular to the created side-by-side arrangement and/or bent so that it extends in a circular shape.

## Revendications

1. Procédé de fabrication d'un enroulement (20) pour un stator (10) d'une machine tournante électrique, dans lequel
plusieurs conducteurs (31, 32, 61, 62, 63, 64) sont mis à disposition et les conducteurs sont enroulés sur une première ailette (80) le long d'une première direction d'enroulement (82) de sorte que les conducteurs entourent la première ailette (80), après avoir atteint un nombre de tours prédéfini sur la première ailette (80), le long d'une seconde direction d'enroulement (91), qui est opposée à la première direction d'enroulement (82), sont pliés sur une deuxième ailette (90) de telle sorte que les conducteurs entourent partiellement la deuxième ailette (90) avec des sections de transition de liaison (70),
sont enroulés sur une troisième ailette (100) le long de la première direction d'enroulement (82) de telle sorte que les conducteurs entourent la troisième ailette (100), et
ensuite les ailettes (80, 90, 100) sont retirées des enroulements (20) de conducteurs ainsi créés, dans lequel les ailettes (80, 90, 100) sont décalées longitudinalement et alignées de telle sorte que leurs axes longitudinaux s'étendent de manière sensiblement parallèles entre eux,
la première ailette (80) et la troisième ailette (100) étant des éléments de moule allongés et ayant respectivement une section transversale cunéiforme, qui présente un premier côté d'enroulement (110) et un second côté d'enroulement (111), le premier côté d'enroulement (110) étant plus long que le second côté d'enroulement (111)
**caractérisé en ce que**
les enroulements de la première ailette (80) et de la troisième ailette (100) forment des enroulements à la fois sur le premier côté d'enroulement (110) et sur le second côté d'enroulement (111) opposé à ce premier côté d'enroulement (110), et les deux côtés d'enveloppement (110, 111) sont reliés l'un à l'autre de telle sorte que des ailettes (80, 100) sont fournies qui présentent essentiellement une forme de coin en profil.

2. Procédé de fabrication d'un enroulement selon la revendication 1, **caractérisé en ce que** la courbure des conducteurs sur la deuxième ailette (90) est réalisée selon un angle d'enroulement (92) sur la deuxième ailette (90) de 100° à 220°,

3. Procédé de fabrication d'un enroulement selon la revendication 1 ou 2, **caractérisé en ce que** les sections de transition de liaison (70) sont formées de telle sorte que les enroulements (20) des conducteurs, qui sont sensiblement en forme de pas de vis, sont respectivement positionnés entre deux plans s'étendant parallèlement l'un à l'autre.

4. Procédé de fabrication d'un enroulement selon l'une des revendications 1 à 3, **caractérisé en ce que**, après avoir positionné les enroulements (20) des conducteurs entre deux plans s'étendant parallèlement l'un à l'autre, la tresse (130) créée est réduite dans son épaisseur s'étendant perpendiculairement à l'agencement côte à côte créé et/ou pliée de manière à prendre une forme circulaire.
